# EUROPÄISCHE PATENTANMELDUNG

(11) **EP 1 845 242 A2**
(43) Veröffentlichungstag der Anmeldung: **17.10.2007**
(21) Anmeldenummer: 07007157.6
(22) Anmeldetag: 05.04.2007
(51) Int. Cl.: F02B 29/04, F02M 25/07

(54) **Wärmetauscher zur Ladeluftkühlung für Kraftfahrzeuge, System**

(30) Priorität: 12.04.2006 DE 102006017610
(71) Anmelder: Behr GmbH & Co. KG, 70469 Stuttgart (DE)
(72) Erfinder: Balci, Sinan, 70439 Stuttgart (DE)

(57) **Zusammenfassung**

Wärmetauscher zur Ladeluftkühlung für Kraftfahrzeuge mit zumindest einem Rohr (3) zur Durchströmung mit zumindest einem zu kühlenden Medium, mit zumindest einem Rohrboden (7) zur Aufnahme von Rohren (3), mit zumindest einem Seitenteil (8, 28) zur Versteifung des Wärmetauschers (1, 20, LLK1, LLK2), wobei der Wärmtauscher zumindest ein Versteifungselement (9, 29) zur Verringerung der Spannungen zwischen Rohrboden (7) und Rohren (3) zu aufweist.

## Beschreibung

Die vorliegende Erfindung betrifft einen Wärmetauscher zur Ladeluftkühlung für Kraftfahrzeuge nach Anspruch 1 sowie ein System.

Wärmeübertrager, insbesondere zur Ladeluftkühlung, weisen zumeist einen Rippenrohrblock, insbesondere aus Flachrohren, sowie im Wesentlichen benachbart zu den Flachrohren angeordnete Wellrippen auf. Die Rohre, insbesondere die Flachrohre, sind zumeist in Rohrböden eingesteckt und mit diesen stoffschlüssig, insbesondere durch Löten, Schweißen, Kleben usw. verbunden. An den Rohrböden sind zumeist Luftsammelkästen angeordnet. Seitlich am Rippenrohrblock sind zumeist Seitenteile, insbesondere zur Versteifung des Wärmetauschers, insbesondere des Ladeluftkühlers, angeordnet.

Aufgrund von Temperaturunterschieden im Betrieb des Ladeluftkühlers zwischen noch ungekühlter Ladeluft sowie aufgrund der Dauerbelastung des Ladeluftkühlers im Betrieb durch Stoßbeanspruchung bei schlechten Straßen sowie im Off-road-Betrieb werden Druck bzw. Zugkräfte erzeugt, die zu Spannungen am Wärmetauscher, insbesondere am Ladeluftkühler, führen. Aufgrund dieser Spannungen ist die Lebensdauer eines Wärmetauschers, insbesondere eines Ladeluftkühlers, relativ begrenzt.

Aus der noch unveröffentlichten DE 102 005 015708.4 der Anmelderin ist ein Wärmetauscher mit Rohren und ggf. Wellrippen sowie mit mindestens einem seitlich zwischen zwei Sammelkästen angeordneten Seitenteil bekannt, wobei das Seitenteil zumindest einen Teil der Zugspannungen aufnimmt, die infolge unterschiedlicher Wärmeausdehnungen der Rohre und ggf. Wellrippen bei Betrieb zumindest auf das äußere Rohr wirken, wobei das Seitenteil Schlitze und/oder Öffnungen aufweist, welche die Federkonstante des Seitenteils gegenüber einem Seitenteil ohne Schlitzen und/oder Öffnungen derart verändert, dass bei einer unterschiedlichen Längenausdehnung der mittleren Rohre im Vergleich zum äußersten, benachbart zum Seitenteil angeordneten Rohr, die auf das äußerste Rohr wirkende Zugspannung verringert ist. Dadurch, dass die Zugspannungen bei Betrieb gezielt verringert werden, ist die Lötverbindung zwischen dem äußersten Rohr und den Rohrböden vor Überlastung geschützt, wodurch Risse und daher eine Undichtheit des Wärmeübertragers vermieden werden können.

Es ist Aufgabe der vorliegenden Erfindung, einen Wärmetauscher der eingangs genannten Art zu verbessern.

Die Aufgabe wird durch die Merkmale des Anspruchs 1 gelöst.

Es wird ein Wärmetauscher zur Ladeluftkühlung für Kraftfahrzeuge vorgeschlagen, der zumindest ein Rohr zur Durchströmung mit zumindest einem zu kühlenden Medium aufweist, der zumindest einen Rohrboden zur Aufnahme von Rohren sowie zumindest ein Seitenteil zur Versteifung des Wärmetauschers aufweist, wobei der Wärmetauscher zumindest ein Versteifungselement zur Verringerung der Spannungen zwischen Rohrboden und Rohren aufweist und das zumindest eine Versteifungselement einteilig mit dem Seitenteil ausgebildet ist.

Der Wärmetauscher ist insbesondere ein Ladeluftkühler für Kraftfahrzeuge. Ferner kann der Wärmetauscher aber auch ein Kühlmittelkühler und/oder ein Ölkühler und/oder ein Abgaskühler und/oder ein Kondensator für eine Klimaanlage und/oder ein Gaskühler für eine Klimaanlage und/oder ein Verdampfer für eine Klimaanlage sein. Zumindest ein Rohr, insbesondere eine Anzahl von Rohren, insbesondere Flachrohre, zur Durchströmung mit zumindest einem zu kühlenden Medium, insbesondere Ladeluft, sind zumindest in einem Rohrboden, insbesondere in zwei Rohrböden, aufgenommen. Zumindest ein Seitenteil, insbesondere zwei Seitenteile, dienen zur Versteifung des Wärmetauschers, insbesondere des Ladeluftkühlers. Zumindest ein Versteifungselement dient zur Verringerung der Spannungen zwischen Rohrboden, insbesondere zwischen den zwei Rohrböden und, dem zumindest einen Rohr, insbesondere den Rohren, insbesondere den Flachrohren. Das zumindest eine Versteifungselement ist einteilig mit dem zumindest einen Seitenteil ausgebildet.

In einer vorteilhaften Weiterbildung ist das zumindest eine Versteifungselement zumindest abschnittsweise als Winkelelement ausgebildet. Das zumindest eine Winkelelement, insbesondere die Winkelelemente, können besonders vorteilhaft den Wärmetauscher, insbesondere den Ladeluftkühler, versteifen, so dass die Spannungen zwischen Rohrboden, insbesondere den Rohrböden und, dem zumindest einen Rohr, insbesondere den Rohren, besonders vorteilhaft verringert werden.

In einer weiteren vorteilhaften Ausführung weist das zumindest eine Versteifungselement zumindest eine Versteifungselementöffnung zur Durchströmung des Versteifungselements mit Kühlmedium auf. Auf diese Weise kann besonders vorteilhaft die mit Kühlmedium, insbesondere Luft, durchströmbare Fläche des Wärmetauschers, insbesondere des Ladeluftkühlers, besonders vorteilhaft erhöht werden, wodurch die Leistung des Wärmetauschers, insbesondere des Ladeluftkühlers, besonders vorteilhaft gesteigert werden kann.

In einer vorteilhaften Weiterbildung ist das zumindest eine Versteifungselement einteilig mit dem Seitenteil ausgebildet. Auf diese Weise sind das zumindest eine Seitenteil und das zumindest eine Versteifungselement einteilig ausgebildet. Auf diese Weise kann zumindest ein Arbeitsschritt besonders vorteilhaft eingespart werden. Ferner entfallen zusätzliche Montagearbeiten besonders vorteilhaft. Besonders vorteilhaft kann zumindest ein Seitenteil einteilig mit zwei, drei, vier oder mehr als vier Versteifungselementen einteilig ausgebildet sein.

Weiterhin kann besonders bevorzugt vorgesehen werden, dass das zumindest eine Versteifungselement zumindest eine Aussparung zur Umformverbesserung aufweist. Auf diese Weise kann das Versteifungselement besonders vorteilhaft umgeformt, insbesondere gebogen oder abgekantet werden.

Ferner kann vorgesehen sein, dass der Wärmetauscher zumindest vier Versteifungselemente aufweist. Auf diese Weise kann der Wärmetauscher, insbesondere der Ladeluftkühler, besonders vorteilhaft versteift werden.

In einer weiteren vorteilhaften Ausgestaltung weist der Wärmetauscher Rippen, insbesondere Wellrippen zur Erhöhung der Wärmeübertragung auf. Auf diese Weise kann die Wärmeübertragung besonders vorteilhaft verbessert werden.

In einer vorteilhaften Weiterbildung weist der Wärmetauscher zumindest ein Rohrbündel von Rohren zur Durchströmung mit Ladeluft auf. Auf diese Weise kann die Wärmeübertragungsleistung besonders vorteilhaft erhöht werden. Ferner kann die Montage besonders einfach ausgeführt werden.

Eine weitere vorteilhafte Ausgestaltung ist dadurch gekennzeichnet, dass der Wärmetauscher zumindest einen Sammelkasten, insbesondere zumindest zwei Sammelkästen, zur Ladeluftsammlung und/oder Ladeluftdiffusion aufweist. Auf diese Weise kann die Ladeluft besonders vorteilhaft auf die einzelnen Rohre, insbesondere Flachrohre, aufgeteilt bzw. nach dem Durchströmen des Wärmetauschers, insbesondere des Ladeluftkühlers besonders vorteilhaft gesammelt werden.

Weiterhin kann besonders bevorzugt vorgesehen werden, dass der Wärmetauscher ein Kühlmodul ist. Auf diese Weise kann durch eine im Wesentlichen benachbarte Anordnung von zumindest einem Kühlmittelkühler und/oder zumindest einem Ladeluftkühler und/oder zumindest einem Kondensator für eine Klimaanlage und/oder zumindest eines Ölkühlers und/oder zumindest eines Abgaskühlers Bauraum besonders vorteilhaft eingespart werden.

Ferner wird ein System mit zumindest einem Wärmetauscher nach einem der Ansprüche 1 bis 9 vorgeschlagen, das zumindest einen Verbrennungsmotor für ein Kraftfahrzeug, zumindest eine erste Turbine eines Abgasturboladers sowie zumindest einen zweiten Wärmetauscher zur Kühlmittelkühlung aufweist. Insbesondere kann die zumindest eine erste Turbine einen Verdichter zur Ladeluftverdichtung antreiben. Insbesondere kann in den zumindest einen zweiten Wärmetauscher zur Kühlmittelkühlung Kühlmittel, insbesondere wasserhaltiges Kühlfluid, insbesondere wasserhaltige Kühlflüssigkeit, den Motor kühlen.

Bei einer weiteren vorteilhaften Ausgestaltung weist das System zumindest einen dritten Wärmetauscher zur Abgaskühlung und/oder zumindest einen Kondensator für eine Klimaanlage auf. Auf diese Weise kann in dem zumindest einen dritten Wärmetauscher rückgeführtes Abgas besonders vorteilhaft gekühlt und der Ladeluft anschließend wieder zugeführt werden. Ferner kann insbesondere zumindest ein Kältemittel einer Klimaanlage in zumindest einem Kondensator für eine Klimaanlage besonders vorteilhaft gekühlt werden.

Weitere vorteilhafte Ausgestaltungen der Erfindung ergeben sich aus den Unteransprüchen und aus der Zeichnung. Die Gegenstände der Unteransprüche beziehen sich sowohl auf den erfindungsgemäßen Wärmetauscher zur Ladeluftkühlung für Kraftfahrzeuge sowie auf das erfindungsgemäße System.

Ausführungsbeispiele der Erfindung sind in der Zeichnung dargestellt und werden im Folgenden näher erläutert, wobei eine Beschränkung der Erfindung hierdurch nicht erfolgen soll. Es zeigen
- Figur 1:: eine isometrische Darstellung eines Wärmetauschers zur Ladeluft-kühlung mit zwei Seitenteilen mit jeweils vier Versteifungswinkeln,
- Figur 2:: eine isometrische Detaildarstellung eines Details A eines Wärmetauscherabschnitts eines Wärmetauschers zur Ladeluftkühlung mit einem Seitenteil und zwei Versteifungswinkeln,
- Figur 3:: eine isometrische Darstellung eines anderen Ausführungsbeispiels eines Wärmetauschers zur Ladeluftkühlung mit zwei Seitenteilen mit jeweils vier Versteifungswinkeln, wobei der Versteifungswinkel eine Aussparung zur verbesserten Umformung aufweist,
- Figur 4:: eine isometrische Darstellung eines Seitenteils mit vier Versteifungswinkeln mit jeweils einer Aussparung zur verbesserten Umformung,
- Figur 5:: eine Vorderansicht eines Wärmetauschers zur Ladeluftkühlung mit zwei Seitenteilen mit jeweils vier Versteifungswinkeln, wobei der Versteifungswinkel eine Aussparung zur verbesserten Umformung aufweist,
- Figur 6:: eine isometrische Darstellung eines Kühlmoduls mit einem Ladeluftkühler, einem Kühlmittelkühler, einem Kondensator für eine Klimaanlage sowie einer Lüfterzarge,
- Figur 7:: ein System mit einem Ladeluftkühler, einem Kühlmittelkühler, einem Kondensator für eine Klimaanlage, einem Abgaskühler auf der Niederdruckseite des Turboladers mit einstufiger Aufladung der Ladeluft,
- Figur 8:: ein System mit einem Ladeluftkühler, einem Kühlmittelkühler, einem Kondensator für eine Klimaanlage, einem Abgaskühler auf der Niederdruckseite mit zweistufiger Aufladung der Ladeluft,
- Figur 9:: ein System mit einem Ladeluftkühler, einem Kühlmitttelkühler, einem Kondensator für eine Klimaanlage, einem Abgaskühler auf der Hochdruckseite des Turboladers mit einstufiger Aufladung der Ladeluft und
- Figur 10:: ein System mit einem Ladeluftkühler, einem Kühlmittelkühler, einem Kondensator für eine Klimaanlage, einem Abgaskühler auf der Hochdruckseite des ersten Turboladers mit zweistufiger Aufladung.

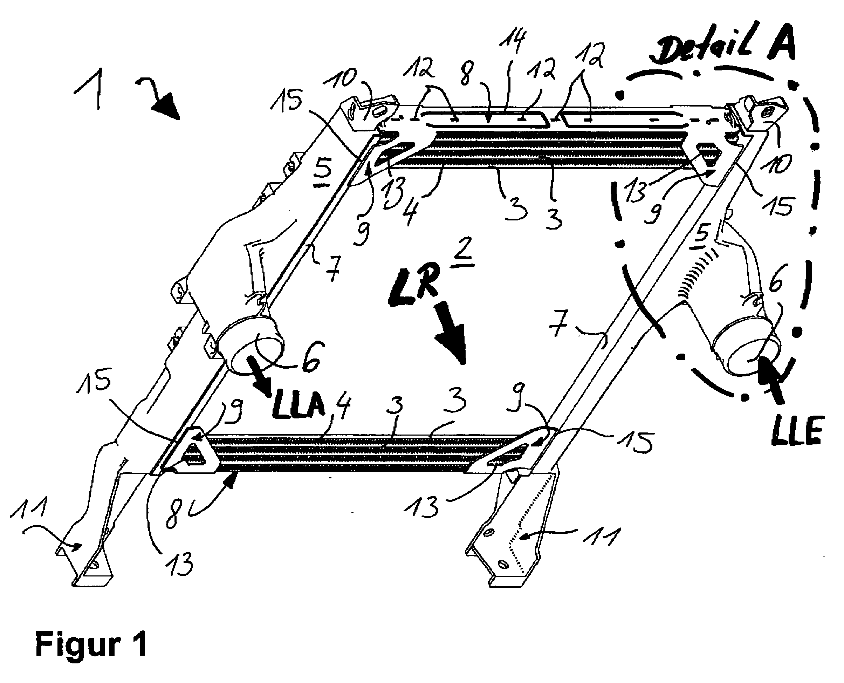

**Figur 1** zeigt eine isometrische Darstellung eines Wärmetauschers 1 zur Ladeluftkühlung mit zwei Seitenteilen 8 mit jeweils vier Versteifungswinkeln 9.

Der Wärmetauscher 1, insbesondere der Ladeluftkühler, weist einen Rippenrohrblock 2 mit einer Anzahl von Flachrohren 3 und einer Anzahl von Wellrippen 4 auf. Die Flachrohre 13 sind im Wesentlichen parallel zueinander angeordnet. Zwischen benachbarten Flachrohren ist immer eine Wellrippe 4 angeordnet. Die Flachrohre 3 sind jeweils in zwei Rohrböden 7 in nicht näher bezeichnete Rohrbodenöffnungen eingesteckt. Die Flachrohre 3 sind aus einem Metall, insbesondere aus Aluminium, insbesondere aus lotplattiertem Aluminium ausgebildet. Die Wellrippen 4 sind ebenfalls aus einem Metall, insbesondere Aluminium, ausgebildet. Im dargestellten Ausführungsbeispiel sind die Wellrippen 4 lotplattiert. Bei einer Lotplattierung ist Lot auf das entsprechende Metall aufgewalzt. Die Flachrohre 3 sind in die beiden Rohrböden 7 eingeschoben und formschlüssig, beispielsweise durch Umformen oder Bördeln, und/oder stoffschlüssig durch Löten, Schweißen, Kleben usw. mit den Rohrböden 7 verbunden. Der Rohrboden 7 ist aus einem Metall, insbesondere Aluminium oder Edelstahl ausgebildet. Ebenso können die Flachrohre 3 und/oder die Wellrippen 4 aus Edelstahl ausgebildet sein. Jeweils ein Luftkasten 5 ist stoffschlüssig, beispielsweise durch Löten, Schweißen, Kleben usw., und/oder formschlüssig durch Bördeln, Falzen oder Verkrimpen mit dem Rohrboden 7 verbunden. Der Luftkasten ist im dargestellten Ausführungsbeispiel aus einem Metall, wie beispielsweise aus Aluminium, insbesondere aus lotplattiertem Aluminium, oder aus einem anderen Metall wie beispielsweise Edelstahl ausgebildet. In einem anderen Ausführungsbeispiel ist der Luftkasten 5 aus Kunststoff oder aus einem Faserverbundwerkstoff ausgebildet. Der Luftkasten 5 weist einen Lufteintritts- und/oder Luftaustrittsstutzen für den Eintritt und/oder Austritt von Ladeluft auf. Der Lufteintritts- und/oder Austrittsstutzen 6 wächst, geht bogenförmig in einen länglichen Verteilungs- bzw. Sammlungsabschnitt des Luftkastens 5 über. In einem anderen Ausführungsbeispiel geht der Lufteintritts- und/oder Luftaustrittsstutzen 6 im Wesentlichen gerade oder unter einem Winkel von 0° bis 90° in den länglichen nicht näher bezeichneten Luftverteilungs- bzw. Luftsammelabschnitt über. Der Lufteintritts- und/oder Luftaustrittsstutzen 6 ist im dargestellten Ausführungsbeispiel einteilig mit dem Luftkasten 5 ausgebildet. In einem anderen Ausführungsbeispiel kann der Lufteintritts- und/oder Luftaustrittsstutzen 6 mit dem Luftkasten 5 formschlüssig, beispielsweise durch Verkrimpen, und/oder stoffschlüssig, beispielsweise durch Verschweißen, Verlöten, Kleben usw., mit dem Luftkasten 5 verbunden sein. Seitlich an den beiden nicht näher bezeichneten Seiten des Wärmetauschers 1 verläuft im Wesentlichen parallel zu den Flachrohren 3 jeweils ein Seitenteil 8. Das Seitenteil 8 ist im Wesentlichen aus einem Metall wie beispielsweise aus Aluminium oder aus Edelstahl oder aus einem anderen beliebigen Stahl oder aus einem Faserverbundwerkstoff ausgebildet. Das Seitenteil weist im Wesentlichen einen nicht näher bezeichneten blechförmigen, im Wesentlichen rechteckigen Mittenabschnitt auf. In dem Mittenabschnitt sind Seitenteilschlitze 14 eingebracht. Die Seitenteilschlitze dienen im Wesentlichen der Anpassung der Federkonstanten des Seitenteils 8 in den jeweiligen Betriebszuständen des Wärmetauschers, insbesondere des Ladeluftkühlers. Ferner sind im Seitenteil 8 Seitenteilaussparungen 12 eingebracht. Hierbei ist ein Teil des Seitenteilmaterials des Seitenteils 8 derart verformt, beispielsweise durch Biegen, dass die zum Seitenteil 8 benachbarte Wellrippe 4 derart im Bereich der Seitenteilaussparung 12 durch das Material des zweiten Teils verformt ist, dass sie nicht aus dem näher bezeichneten Raum, der zwischen Seitenteil und dem zum Seitenteil 8 benachbart angeordneten Flachrohr herausfallen kann, Ferner ist aus dem Seitenteil 8 an den jeweiligen Enden, die sich im Wesentlichen benachbart zu den Luftkästen 5 befinden, eine Lasche derart angeordnet und aus dem Seitenteil 8 ausgebildet, dass eine nicht näher bezeichnete Zunge des Rohrbodens 7 durch die nicht näher bezeichnete Lasche des Seitenteils 8 hindurchgesteckt werden kann, so dass das Seitenteil 8 und der Rohrboden 7 formschlüssig, beispielsweise durch Umbiegen oder Verbiegen, miteinander verbunden bzw. zumindest miteinander fixiert sind.

Aus dem Seitenteil 8 sind jeweils an den Enden des Seitenteils 8 Versteifungswinkeln 9 ausgebildet. An jeweils einem Ende sind zwei Versteifungswinkel 9 angeordnet. Im dargestellten Ausführungsbeispiel weist das Seitenteil 8 insgesamt vier Versteifungswinkel 9, jeweils zwei an beiden Endbereichen des Seitenteils 8 auf. Die Versteifungswinkel 9 sind im Wesentlichen senkrecht zur nicht näher bezeichneten Erstreckungsrichtung der Flachrohre 3 angeordnet. Die Versteifungswinkel sind derart angeordnet, dass die Luftströmungsrichtung LR den normalen Vektor der nicht näher bezeichneten Versteifungswinkelfläche des Versteifungswinkels 9 bildet. Die Versteifungswinkel 9 weisen im dargestellten Ausführungsbeispiel im Wesentlichen eine dreieckige Form auf. In einem anderen Ausführungsbeispiel können die Versteifungswinkel zumindest abschnittsweise eine runde und/oder gewellte und/oder mehreckige und/oder ellipsenartige Form und/oder eine Kombination der zuvor genannten Formen aufweisen. Im dargestellten Ausführungsbeispiel umgreifen zwei Versteifungswinkel 9 im Wesentlichen zumindest abschnittsweise den Rippenrohrblock 2. Im dargestellten Ausführungsbeispiel weisen alle vier Versteifungswinkel 9 zumindest eine Versteifungswinkelöffnung 13 auf. Versteifungswinkelöffnung 13 ist im Wesentlichen fensterartig ausgebildet, so dass Luft zur Kühlung der Ladeluft durch den Versteifungswinkel hindurch durch nicht näher bezeichnete Öffnungen in den Wellrippen strömen kann, so dass die Luftströmung der Kühlluft nur unwesentlich behindert wird. In einem anderen Ausführungsbeispiel weist der Versteifungswinkel 9 zwei, drei, vier oder mehr als vier Versteifungswinkelöffnungen 13 auf. Die Versteifungswinkelöffnungen 13 können beispielsweise als Bohrungen, als dreieckige oder viereckige oder mehreckige Öffnungen oder als ovale Langlöcher oder als Kombination der zuvor genannten Formen ausgebildet sein. Im dargestellten Ausführungsbeispiel berühren die Versteifungswinkel 9 den Rohrboden 7 zumindest abschnittweise in dem Verbindungsbereich 15. Im dargestellten Ausführungsbeispiel sind die Versteifungswinkel 9 zumindest abschnittsweise mit Flachrohren 3 und/oder Wellrippen 4 stoffschlüssig, beispielsweise durch Löten, Schweißen, Kleben usw. verbunden. Ferner sind die Versteifungswinkel 9, stoffschlüssig, beispielsweise durch Verlöten, Verkleben, Schweißen, und/oder formschlüssig, beispielsweise durch Falzen, Bördeln, Verkrimpen usw. im Verbindungsbereich 15 mit den Rohrböden 7 und/oder mit zumindest einem Rohrboden 7 verbunden. An Seitenendabschnitten, die nicht näher bezeichnet sind, des Luftkastens 5, die im Wesentlichen parallel zu einem Seitenteil 8 angeordnet sind, weist der Luftkasten 5 ein erstes Befestigungselement 10 auf. Das erste Befestigungselement 10 dient der Befestigung des Wärmetauschers 1, insbesondere des Ladeluftkühlers, beispielsweise zur Befestigung an einem Kühlmittelkühler, beispielsweise eines Kühlmoduls oder zur Befestigung an einem Fahrzeugkarosserie- oder Verbrennungsmotorabschnitt. Im dargestellten Ausführungsbeispiel ist das erste Befestigungselement 10 einteilig mit dem Luftkasten 5 ausgebildet. In einem anderen Ausführungsbeispiel ist das erste Befestigungselement 10 formschlüssig und/oder stoffschlüssig mit dem Luftkasten 5 beispielsweise durch Verlöten, Verschweißen, Kleben usw. mit dem Luftkasten 5 verbunden. Im Wesentlichen auf der gegenüberliegenden Seite des Luftkastens 5 gesehen zum ersten Befestigungselement 10 ist ein zweites Befestigungselement 11 am Luftkasten 5 angeordnet. Im dargestellten Ausführungsbeispiel ist das Befestigungselement 10 einteilig mit dem Luftkasten 5 ausgebildet. In einem anderen Ausführungsbeispiel ist das zweite Befestigungselement 11 mit dem Luftkasten 5 stoffschlüssig beispielsweise durch Löten, Schweißen, Kleben usw. mit dem Luftkasten 5 verbunden. Das zweite Befestigungselement 11 dient ebenfalls der Befestigung eines anderen Wärmetauschers wie beispielsweise eines Kühlmittelkühlers und/oder zur Befestigung des Wärmetauschers 1 zur Ladeluftkühlung in der Fahrzeugkarosserie und/oder an einem Motorelement. Das zweite Befestigungselement 11 weist im dargestellten Ausführungsbeispiel 2 Bohrungen zum Durchstecken von Befestigungsmitteln wie beispielsweise Schrauben auf. In einem anderen Ausführungsbeispiel weist das Befestigungselement 11 zwei, drei oder mehr als drei oder eine Bohrung auf. Das erste Befestigungselement 10 weist ebenfalls eine Bohrung zum Durchstecken eines Befestigungsmittels wie beispielsweise eine Schraube auf. In einem anderen Ausführungsbeispiel weist das Befestigungselement 10 zwei, drei oder mehr als drei Bohrungen, insbesondere Langlochbohrungen, zum Durchstecken von Befestigungsmitteln wie beispielsweise Schrauben auf. Durch den Ladelufteintritt LLE strömt ungekühlte Ladeluft in den Wärmetauscher 1 in den Luftkasten 5 ein, wird auf die Flachrohre des Rippenrohrblocks zwei aufgeteilt, durchströmt die Flachrohre 3, wird dabei durch die durchströmende Kühlluft, welche im Wesentlichen in der Luftströmungsrichtung LR den Wärmetauscher 1 durchströmt, gekühlt und wird in einem weiteren Luftkasten 5 wieder zusammengeführt und verlässt den Wärmetauscher 1 durch den Luftaustrittsstutzen 6 des Luftkastens 5 in Richtung der Luftaustrittsrichtung LLA. In einem anderen Ausführungsbeispiel können Ladelufteintritt LLE und Ladeluftaustritt LLA im Vergleich zum dargestellten Ausführungsbeispiel vertauscht sein.

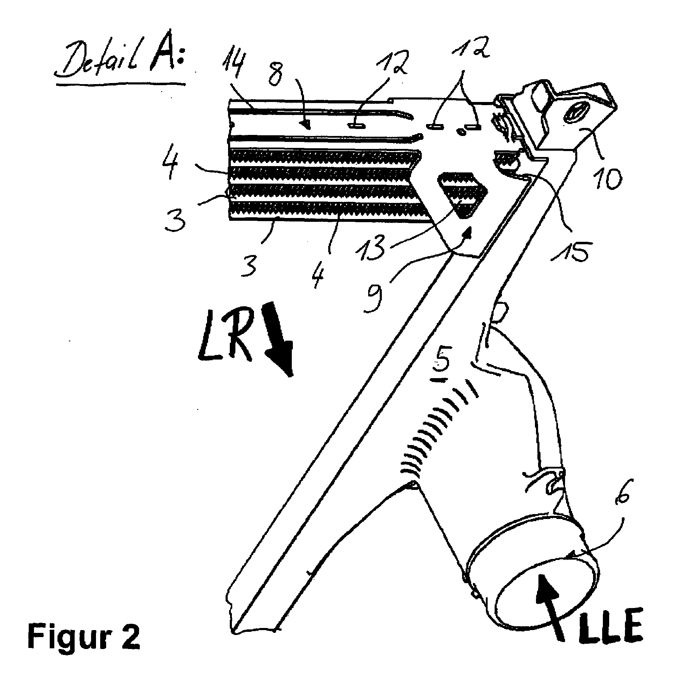

**Figur 2** zeigt eine isometrische Detaildarstellung eines Details A, eines Wärmetauscherabschnitts eines Wärmetauschers 1 zur Ladeluftkühlung mit einem Seitenteil 8 und zwei Versteffungswinkeln 9. Gleiche Merkmale sind mit den gleichen Bezugszeichen versehen wie in Figur 1.

Figur 2 zeigt gegenüber Figur 1 das Detail A vergrößert.

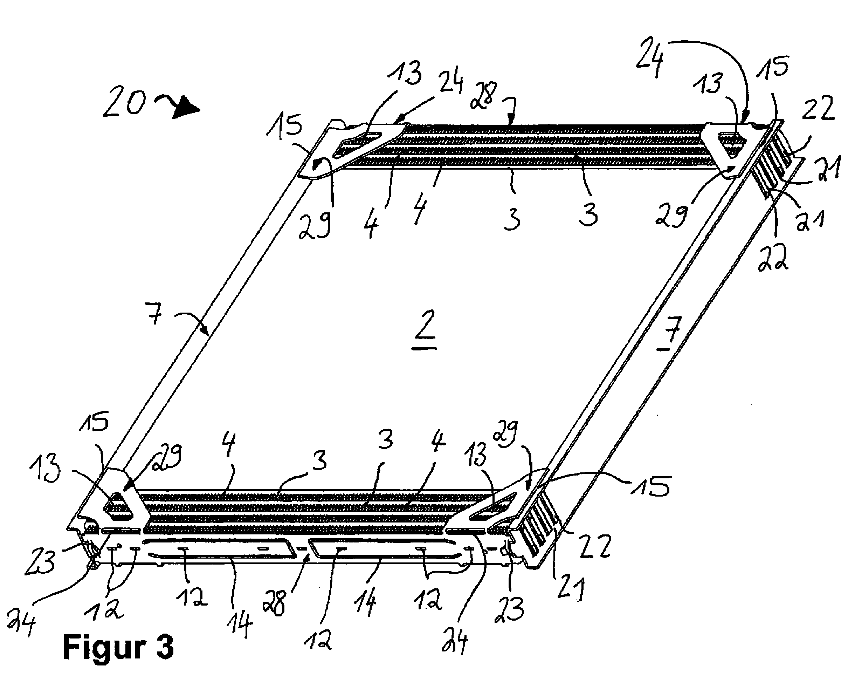

**Figur 3** zeigt eine isometrische Darstellung eines anderen Ausführungsbeispiels eines Wärmetauschers 20 zur Ladeluftkühlung mit zwei Seitenteilen 28 mit jeweils vier Versteifungswinkein 29, wobei die Versteifungswinkel 29 eine Aussparung 24 zur verbesserten Umformung des Versteifungswinkels aufweisen.

Im dargestellten Ausführungsbeispiel sind vier Versteifungswinkel 29 einteilig mit dem Seitenteil 28 ausgebildet. In einem anderen Ausführungsbeispiel können ein, zwei, drei, vier oder mehr als vier Versteifungswinkel 29 einteilig mit dem Seitenteil 28 ausgebildet sein. In einem anderen Ausführungsbeispiel sind ein, zwei, drei, vier oder mehr als vier Seitenteile 28 mit dem Seitenteil 28 zumindest abschnittsweise formschlüssig und/oder stoffschlüssig beispielsweise durch Löten, Schweißen, Kleben usw. verbunden.

Das Seitenteil 28, welches mit ein, zwei, drei, vier oder mehr als vier Versteifungswinkeln 29 einteilig ausgebildet ist, wird zumeist derart hergestellt, dass zunächst in einem ersten Verfahrensschritt die wesentliche Kontur und/oder die Aussparungen des Seitenteils sowie die wesentliche Kontur des zumindest einen Versteifungswinkels 29 erzeugt werden. Dabei wird beispielsweise die Versteifungswinkelöffnung 13 aus dem Blech, welches zukünftig den Versteifungswinkel 29 bilden wird, ausgestanzt, ferner werden die im Ausführungsbeispiel dargestellten Seitenteilschlitze 14 und/oder die Aussparung 24 aus dem Seitenteil 28 bzw. aus dem zukünftigen Versteifungswinkel 29, insbesondere aus dem zukünftigen Versteifungswinkel 29, ausgestanzt. Ferner können die Seitenteilaussparungen 12, welche der späteren Befestigung der dem Seitenteil 28 benachbarten Wellrippe 4 bei diesem Fertigungsschritt oder bei einem anderen Ausführungsbeispiel bei einem späteren Fertigungsschritt in das Seitenteil 28 eingebracht werden. Im dargestellten Ausführungsbeispiel sind 8 Seitenteilaussparungen 12 in das Seitenteil 28 eingebracht. Bei einem anderen Ausführungsbeispiel können ein bis acht oder mehr als acht Aussparungen 12 in das Seitenteil 28 eingebracht sein. Ferner wird beispielsweise durch Umformen, wie Biegen und/oder Ausstanzen, die Seitenteillasche 23 in das Seitenteil 28 eingebracht. Im dargestellten Ausführungsbeispiel weist das Seitenteil 28 zwei Seitenteillaschen auf. In einem anderen Ausführungsbeispiel kann das Seitenteil 28 ein oder zwei oder mehr als zwei Seitenteillaschen 23 aufweisen. In einem anschließenden Fertigungsschritt werden die nicht näher bezeichneten Versteifungswinkelabschnitte um eine Linie, die im Wesentlichen in Richtung der als länglicher Schlitz ausgebildeten Aussparung 24 verläuft, umgeformt, insbesondere gebogen bzw. abgekanzelt, derart, dass der Versteifungswinkel 29, insbesondere das Versteifungswinkelelement, steht, wobei der Versteifungswinkel 29 im Wesentlichen unter einem nicht näher bezeichneten im Wesentlichen rechteckigen Winkel zum Seitenteil 28, insbesondere zur Seitenteilfläche, ausgebildet ist. Bis auf die zumindest eine Aussparung 24 sind die Seitenteile 28 und die Seitenteile 8 im Wesentlichen gleich ausgebildet.

Der Rohrboden 7 weist eine Anzahl von Rohrbodenöffnungen 21 auf. Durch die Rohrbodenöffnungen 21 werden Flachrohre 3, die zumindest eine Flachrohröffnung 22 aufweisen, in den Rohrboden 7 eingeschoben und mit diesem formschlüssig, beispielsweise durch ein umformendes Fertigungsverfahren wie Biegen oder Aufweiten, und/oder stoffschlüssig, wie beispielsweise Löten, Schweißen, Kleben usw. mit dem Rohrboden 7, verbunden.

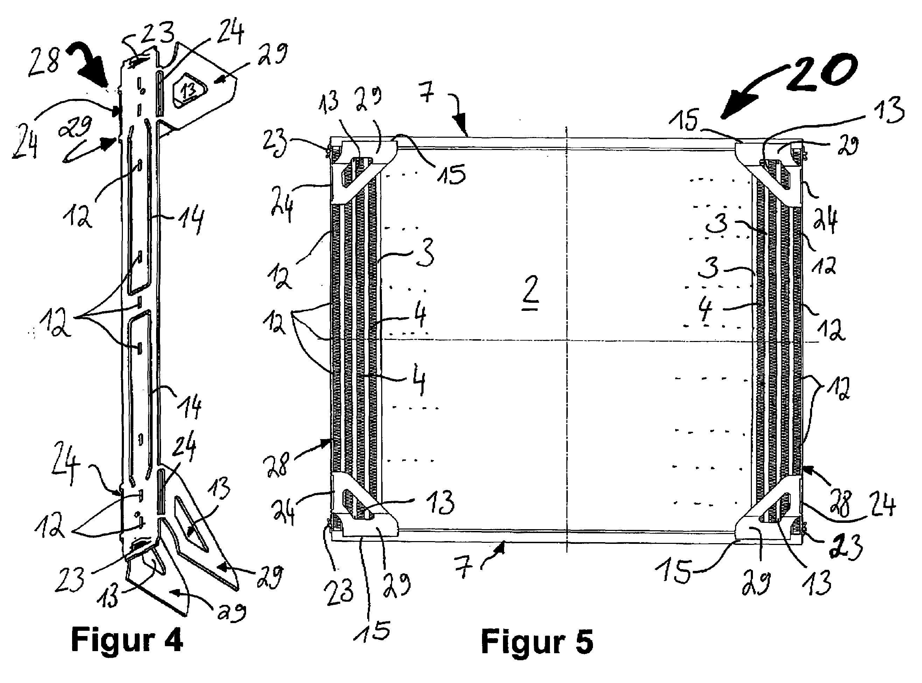

**Figur 4** zeigt eine isometrische Darstellung eines Seitenteils 28 mit vier Versteifungswinkeln 29. Gleiche Merkmale sind mit den gleichen Bezugszeichen versehen wie in den vorherigen Figuren.

**Figur 5** zeigt eine Vorderansicht eines Wärmetauschers 20 zur Ladeluftkühlung mit zwei Seitenteilen 28 mit jeweils vier Versteifungswinkeln 29. Gleiche Merkmale sind mit dem gleichen Bezugszeichen versehen wie in den vorhergehenden Figuren.

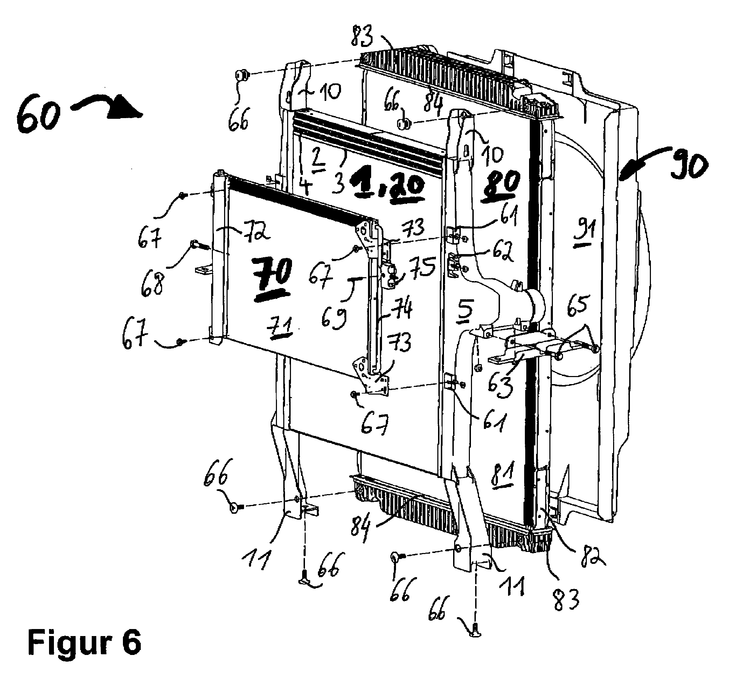

**Figur 6** zeigt eine isometrische Darstellung eines Kühlmoduls 60 mit einem Ladeluftkühler 1, 20 mit einem Kühlmittelkühler 80, mit einem Kondensator 70 für eine Klimaanlage sowie mit einer Lüfterzarge 90. Gleiche Merkmale sind mit den gleichen Bezugszeichen versehen wie in den vorherigen Figuren.

Das Kühlmodul 60 ist als Explosionsdarstellung dargestellt. Der Kondensator 70 und der Kühlmittelkühler 80 sind benachbart zum Ladeluftkühler 1, 20 angeordnet. Der Kondensator 70 und/oder der Kühlmittelkühler 80 sind im Wesentlichen parallel zum Ladeluftkühler 1, 20 derart angeordnet, dass der Kondensator für eine Klimaanlage auf der einen Seite des Ladeluftkühlers 1, 20 und der Kühlmittelkühler 80 auf der anderen Seite des Ladeluftkühlers 1, 20 angeordnet ist.

Der Kondensator 70 für eine Klimaanlage weist einen Kondensatorrippenrohrblock 71 mit nicht näher dargestellten Rohren zum Durchfluss von Kältemittel, insbesondere Flachrohre, sowie Rippen zur verbesserten Wärmeübertragung, insbesondere Wellrippen, auf. Ferner ist ein Trockner und/oder Sammelbehälter an dem Kondensator 70 angeordnet bzw. mit diesem formschlüssig beispielsweise durch Verschrauben und/oder stoffschlüssig beispielsweise durch Verlöten oder Schweißen verbunden oder in einem anderen Ausführungsbeispiel einteilig mit dem Kondensator 70 ausgeführt. Kältemittelleitungen 74 führen von einem nicht näher bezeichneten Kondensatorsammelkasten zu einem Ventilelement 75. Ferner weist der Kondenstor 70 ein fünftes Befestigungselement, zwei, drei oder mehr als drei fünfte Befestigungselemente 73, auf über welche der Kondensator 70 an dem Wärmetauscher 1, 20 zur Ladeluftkühlung formschlüssig, beispielsweise durch Verschrauben, befestigt sind und/oder stoffschlüssig, beispielsweise durch Verlöten, Schweißen usw., befestigt sind. Der Kondensator 70 ist über dritte Schrauben an dem Wärmetauscher 1, 20 befestigt. In einem anderen Ausführungsbeispiel ist der Kondensator 70 mit ein bis vier oder mehr als vier dritten Schrauben 67 an dem Wärmetauscher 1, 20 zur Ladeluftkühlung befestigt.

Der Kühlmittelkühler 80 weist einen Kühlmittelkühlerrippenrohrblock 81 mit einer Anzahl von Rohren, insbesondere Flachrohren, sowie mit einer Anzahl von Rippen, insbesondere Wellrippen zur verbesserten Wärmeleitung, auf. Ferner weist der Kühlmittelkühler 80 zumindest ein Kühlmittelkühlerseitenelement 82, insbesondere zwei oder mehr als zwei Kühlmitteikühlerseitenelemente 82 auf. Ferner weist der Kühlmittelkühler 80 zwei Wasserkästen 82 auf. Die beiden Wasserkästen 83 sind einander gegenüberliegend im Wesentlichen rechtwinklig zu den Kühlmittelkühlerseitenelementen 82 angeordnet. Die Wasserkästen 83 sind im dargestellten Ausführungsbeispiel aus Kunststoff und/oder aus einem Faserverbundwerkstoff ausgebildet. In einem anderen Ausführungsbeispiel sind die Wasserkästen 83 aus einem Metall wie beispielsweise aus Aluminium ausgebildet. Die Wasserkästen 83 sind im dargestellten Ausführungsbeispiel mittels eines urformenden Fertigungsverfahrens wie beispielsweise Spritzgießen, insbesondere Kunststoffspritzgießen, hergestellt. Die Rohre, insbesondere Flachrohre, des Kühlmittelkühlers 80 sowie die Wellrippen sind aus einem Metall, insbesondere Aluminium, ausgebildet, welches im dargestellten Ausführungsbeispiel lotplattiert ist. Lot ist insbesondere auf das Aluminium aufgewalzt. Der Kühlmittelkühler 80 ist im dargestellten Ausführungsbeispiel formschlüssig mit dem Wärmetauscher 1, 20 zur Ladeluftkühlung verbunden. Dazu werden zweite Schrauben 66 durch erste Befestigungselemente 10 und/oder zweite Befestigungselemente 11 des Ladeluftkühlers 1, 20 gesteckt und in die Wasserkästen 83 des Kühlmittelkühlers 80 eingeschraubt. Ferner wird an den nicht näher bezeichneten Lufteintritts- und/oder Luftaustrittsstutzen des Ladeluftkühlers 1, 20 ein erstes Verbindungselement 63 mittels ersten Schrauben 65, insbesondere mittels zwei oder mehr als zwei ersten Schrauben 65, angeschraubt und mit der Fahrzeugkarosserie formschlüssig, beispielsweise durch Verschrauben, verbunden. Im dargestellten Ausführungsbeispiel ist der Ladeluftkühler 1, 20 mit zwei ersten Verbindungselementen 63 mit der Kraftfahrzeugkarosserie verbunden. An dem Kühlmittelkühler 80 ist ferner eine Lüfterzarge 90 angeordnet. Die Lüfterzarge 90 weist eine Lüfterzargenöffnung 91 auf, die im Wesentlichen als runde Öffnung ausgebildet ist. Die Lüfterzarge 90 ist im dargestellten Ausführungsbeispiel aus Kunststoff ausgebildet in einem anderen Ausführungsbeispiel ist sie beispielsweise aus einem Faserverbundwerkstoff ausgebildet.

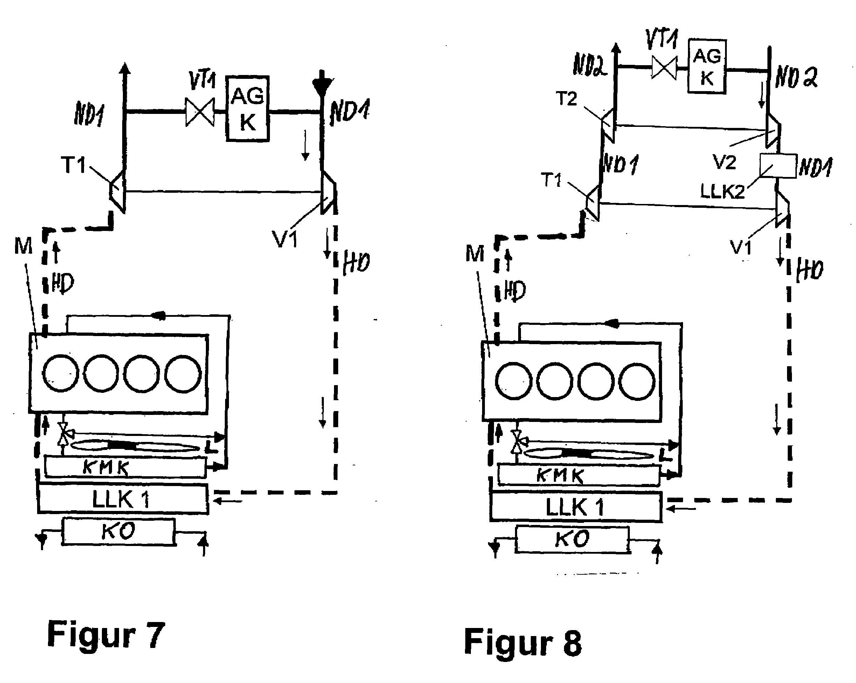

**Figur 7** zeigt ein System mit einem Ladeluftkühler LLK1, einem Kühlmittelkühler KMK, einem Kondensator für eine Klimaanlage KO, einem Abgaswärmetauscher AGK auf der Niederdruckseite des Turboladers mit einstufiger Aufladung. Gleiche Merkmale sind mit den gleichen Bezugszeichen versehen wie in den vorherigen Figuren.

Das dargestellte System zeigt einen Verbrennungsmotor M sowie einen Wärmetauscher AGK und ein Ventil VT1, das auf der Niederdruckseite geordnet ist, wobei die Aufladung der Ladeluft einstufig erfolgt. Die Anordnung auf der Niederdruckseite bedeutet, dass der Wärmetauscher AGK und/oder das Ventil VP1 abströmseitig der ersten Turbine auf einem Niederdruckniveau ND1 angeordnet sind. Die Ladeluft wird aus der Umgebung angesaugt und befindet sich auf dem Niederdruckniveau ND1 und wird anschließend durch den Verdichter V1 auf Hochdruckniveau HD verdichtet. Dabei erwärmt sich die aufgeladene Luft und wird im Ladeluftkühler LLK1, der im Wesentlichen dem Wärmetauscher zur Ladeluftkühlung 1, 20 entspricht, gekühlt. Anschließend wird die gekühlte Ladeluft, welche ebenso rückgeführtes Abgas aufweist, dem Verbrennungsmotor M zugeführt. Benachbart zu dem Ladeluftkühler LLK1 ist ein Kondensator für eine Klimaanlage KO angeordnet. Ferner ist benachbart zum ersten Ladeluftkühler LLK1 ein Kühlmittelkühler KMK angeordnet. Benachbart zu dem Kühlmittelkühler ist ein Lüfter im Wesentlichen parallel zu dem Kühlmittelkühler KMK angeordnet. Der Lüfter L dient der Ansaugung von Luft durch den Kondensator und/oder durch den Ladeluftkühler LLK1 und/oder durch den Kühlmittelkühler KMK. In einem anderen Ausführungsbeispiel kann der Lüfter L vor dem Kondensator KO oder vor dem Ladeluftkühler LLK1 oder zwischen Ladeluftkühler LLK1 und dem Kühlmittelkühler KMK angeordnet sein. Kühlmittel wie beispielsweise Kühlwasser durchströmt den Motor M und gelangt durch ein Ventil, welches nicht näher bezeichnet ist, in den Kühlmittelkühler, wird dort abgekühlt und wird wieder im Motor M zugeführt und durchströmt diesen erneut. In einer anderen Stellung des näher bezeichneten Ventils, insbesondere des Dreiwegeventils, wird Kühlmittel am Kühlmittelkühler KMK beigepasst und wird nicht durch den Kühlmittelkühler KMK geführt. Durch den Kondensator KO strömt Kältemittel, welches in dem Kondensator KO abgekühlt wird. Im dargestellten Ausführungsbeispiel ist das Ventil, insbesondere das Abgasventil VT1 vor dem Abgaswärmetauscher AGK angeordnet. In einem anderen Ausführungsbeispiel ist das Ventil VT1 nach dem Abgaskühler AGK angeordnet. In einem weiteren Ausführungsbeispiel ist das Ventil VT1 in den Abgaswärmetauscher AGK integriert bzw. mit diesem einteilig ausgebildet.

**Figur 8** zeigt ein System mit einem Ladeluftkühler LLK1, einem Kühlmittelkühler KMK, einen Kondensator KO für eine Klimaanlage, einen Abgaskühler AGK, der auf der Niederdruckseite des Turboladers T2/V2 angeordnet ist, wobei die Aufladung zweistufig erfolgt. Gleiche Merkmale sind mit den gleichen Bezugszeichen versehen wie in den vorherigen Figuren.

Im Unterschied zu Figur 7 weist Figur 8 zwei Turbolader auf. Der erste Turbolader besteht aus einer ersten Turbine T1, welche einen ersten Verdichter V1 antreibt. Der erste Verdichter V1 dient der Ladeluftkomprimierung. Ferner weist das System aus Figur 8 einen zweiten Turbolader mit einer zweiten Turbine T2, insbesondere eine Abgasturbine, auf, welche einen zweiten Verdichter V2 zur Ladeluftaufladung antreibt.

Der Abgaskühler AGK ist auf der Niederdruckseite ND2 der Turbine bzw. des Verdichters V2 angeordnet. Das Ventil VT1 ist im dargestellten Ausführungsbeispiel vor dem Abgaskühler AGK angeordnet. In einem anderen Ausführungsbeispiel ist das Ventil VT1 nach dem Abgaskühler AGK angeordnet. In einem weiteren Ausführungsbeispiel ist das Ventil VP1 in den Abgaskühler AGK integriert bzw. mit diesem einteilig ausgebildet. Ladeluft wird aus der Umgebung angesaugt. Der noch nicht komprimierten Ladeluft wird beispielsweise rückgeführtes Abgas zugemischt, anschließend erfolgt die Verdichtung der angesaugten Ladeluft und/oder des zugeführten Abgases von dem Niederdruckniveau ND2 in dem Verdichter V2 auf das Niederdruckniveau ND1. Das Niederdruckniveau ND1 ist höher als das Niederdruckniveau ND2, d. h. der Druck im Niederdruckbereich ND1 ist höher als der Druck im Niederdruckbereich ND2. Nach der Komprimierung wird die aufgeladene Luft und/oder das zugeführte und rückgeführte Abgas in einem Zwischenkühler, insbesondere einem Ladeluftkühler LLK2 abgekühlt, bevor es vom Niederdruckniveau ND1 mittels in dem Verdichter V1 auf das Hochdruckniveau HD verdichtet wird. Im Hochdruckniveau HD herrscht ein höherer Druck als im Niederdruckbereich ND1. Anschließend wird die komprimierte Ladeluft und/oder das rückgeführte Abgas im Ladeluftkühler LLK1 abgekühlt, bevor es dem Motor M zugeführt wird.

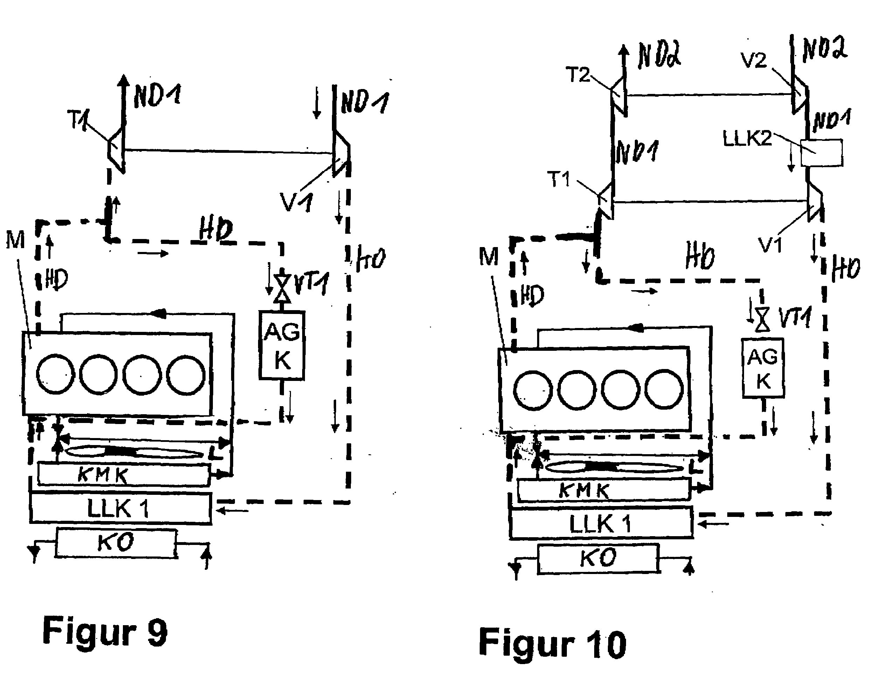

**Figur 9** zeigt ein System mit einem Ladeluftkühler LLK1, einem Kühlmittelkühler KMK, einem Kondensator für eine Klimaanlage KO, einem Abgaskühler AGK, der auf der Hochdruckseite, d. h. auf der Hochdruckseite mit dem Druckniveau HD der Turbine, insbesondere der ersten Turbine T1 angeordnet ist. Die Aufladung erfolgt einstufig. Gleiche Merkmale sind mit den gleichen Bezugszeichen versehen wie in den vorherigen Figuren.

Nach dem Durchströmen des Motors M1 wird ein Teil des Abgases abgezweigt und über ein Ventil VT1 durch einen Abgaskühler AGK geführt, in diesem abgekühlt und der im Ladeluftkühler LLK1 abgekühlten Ladeluft nach Bedarf zugemischt, wobei die Mischung anschließend wieder dem Motor M zugeführt wird. Das Ventil VT1 kann auch nach dem Abgaskühler AGK angeordnet sein bzw. in den Abgaskühler AGK integriert bzw. mit diesem einteilig ausgebildet sein.

**Figur 10** zeigt ein System mit einem Ladeluftkühler LLK 1, 20, einem Kühlmittelkühler KMK 80, einem Kondensator KO 70, einem Abgaskühler AGK, wobei der Abgaskühler auf der Hochdruckseite der ersten Turbine T1 dem Hochdruckniveau HD angeordnet ist. Das System ist im Wesentlichen wie das System in Figur 9 ausgebildet, außer, dass die Aufladung der aus der Umgebung angesaugten Ladeluft zweistufig erfolgt. Gleiche Merkmale sind mit den gleichen Bezugszeichen versehen wie in den vorherigen Figuren.

Die aus der Umgebung angesaugte Ladeluft befindet sich auf dem Niederdruckniveau ND2 und wird anschließend im zweiten Verdichter V2 auf das Niederdruckniveau ND1 verdichtet. Das Niederdruckniveau ND1 weist einen höheren Druck auf als das Niederdruckniveau ND2. Die verdichtete Ladeluft wird in einem Zwischenkühler, insbesondere in einem Ladeluftkühler LLK2 abgekühlt und anschließend mit dem ersten Verdichter V1 auf das Hochdruckniveau HD komprimiert. Die Ladeluft wird im ersten Ladeluftkühler LLK1 1, 20 abgekühlt und bedarfsweise mit rückgeführtem Abgas vermischt und anschließend dem Motor M zugeführt.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Wärmetauscher zur Ladeluftkühlung für Kraftfahrzeuge
aufweisend
zumindest ein Rohr (3) zur Durchströmung mit zumindest einem zu kühlenden Medium,
zumindest einen Rohrboden (7) zur Aufnahme von Rohren (3), zumindest ein Seitenteil (8, 28) zur Versteifung des Wärmetauschers (1, 20, LLK1, LLK2),
**dadurch gekennzeichnet, dass**
der Wärmetauscher (1, 20, LLK1, LLK2) zumindest ein Versteifungselement (9, 29) zur Verringerung der Spannungen zwischen Rohrboden (7) und Rohren (3) aufweist, wobei das zumindest eine Versteifungselement (9, 29) einteilig mit dem Seitenteil (8, 28) ausgebildet ist.

2. Wärmetauscher nach Anspruch 1, **dadurch gekennzeichnet, dass** das zumindest eine Versteifungselement (9, 29), zumindest abschnittsweise als Winkelelement ausgebildet ist.

3. Wärmetauscher nach einem der vorhergehenden Ansprüche, **dadurch gekennzeichnet, dass** das zumindest eine Versteifungselement (9, 29), zumindest eine Versteifungselementöffnung (13) zur Durchströmung des Versteifungselements (9, 29) mit Kühlmedium aufweist.

4. Wärmetauscher nach einem der vorhergehenden Ansprüche, **dadurch gekennzeichnet, dass** das zumindest eine Versteifungselement (9, 29), zumindest eine Aussparung (24) zu Umformverbesserung aufweist.

5. Wärmetauscher nach einem der vorhergehenden Ansprüche, **dadurch gekennzeichnet, dass** der Wärmetauscher (1, 20, LLK1, LLK2) zumindest vier Versteifungselemente (9,29) aufweist.

6. Wärmetauscher nach einem der vorhergehenden Ansprüche, **dadurch gekennzeichnet, dass** der Wärmetauscher (1, 20, LLK1, LLK2) Rippen (4), insbesondere Wellrippen, zur Erhöhung der Wärmeübertragung aufweist.

7. Wärmetauscher nach einem der vorhergehenden Ansprüche, **dadurch gekennzeichnet, dass** der Wärmetauscher (1, 20, LLK1, LLK2) zumindest ein Rohrbündel (2) von Rohren (3) zur Durchströmung mit Ladeluft aufweist.

8. Wärmetauscher nach einem der vorhergehenden Ansprüche, **dadurch gekennzeichnet, dass** der Wärmetauscher (1, 20, LLK1, LLK2) zumindest einen Sammelkasten (5), insbesondere zumindest zwei Sammelkästen, zur Ladeluftsammlung und/oder Ladeluftdiffusion aufweist.

9. Wärmetauscher nach einem der vorhergehenden Ansprüche, **dadurch gekennzeichnet, dass** der Wärmetauscher ein Kühlmodul (60) ist.

10. System mit zumindest einem Wärmetauscher nach einem der Ansprüche 1 bis 9
aufweisend
zumindest einen Verbrennungsmotor (M) für ein Kraftfahrzeug,
zumindest eine erste Turbine (T1) eines Abgasturboladers und
zumindest einen zweiten Wärmetauscher (80, KMK) zur Kühlmittelkühlung.

11. System nach Anspruch 10, **dadurch gekennzeichnet, dass** das System zumindest einen dritten Wärmetauscher (AGK) zur Abgaskühlung und/oder zumindest einen Kondensator (70, KO) für eine Klimaanlage aufweist.
